# EUROPÄISCHE PATENTSCHRIFT

(11) **EP 2 156 605 B1**
(45) Veröffentlichungstag und Bekanntmachung des Hinweises auf die Patenterteilung: **25.01.2012**
(21) Anmeldenummer: 08759055.0
(22) Anmeldetag: 06.06.2008
(51) Int. Cl.: H04L 12/14

(54) **VERFAHREN ZUR LAUFZEITGENAUEN GUTHABENVERRECHNUNG VON UNTERSCHIEDLICHEN LOYALITÄSPROGRAMMEN AUFGRUND DES TELEFONIERVERHALTENS UND DER NUTZUNG VON IP BASIERTEN MULTIMEDIA SUBSYSTEM (IMS) DIENSTEN**
METHOD FOR REAL TIME CREDIT CALCULATION OF DIFFERING LOYALTY PROGRAMMES BASED ON TELEPHONE USAGE AND USE OF IP-BASED MULTIMEDIA SUB SYSTEM (IMS) SERVICES
PROCÉDÉ DE CALCUL DE CRÉDIT EN TEMPS RÉEL DE DIFFÉRENTS PROGRAMMES DE FIDÉLISATION SUR LA BASE DE L'UTILISATION DE TÉLÉPHONE ET DE L'UTILISATION DE SERVICES DE SOUS-SYSTÈMES MULTIMÉDIA (IMS) IP

(30) Priorität: 13.06.2007 DE 102007027190
(43) Veröffentlichungstag der Anmeldung: 24.02.2010
(73) Patentinhaber: T-Mobile International AG, 53227 Bonn (DE)
(72) Erfinder: BLICKER, Stefan, 53343 Wachtberg (DE)
(74) Vertreter: Riebling, Peter
(86) Internationale Anmeldenummer: PCT/EP2008/004509
(87) Internationale Veröffentlichungsnummer: WO 2008/151757

(56) Entgegenhaltungen:
- EP-A- 1 045 324
- US-A1- 2004 097 245

## Beschreibung

Die Erfindung betrifft ein Verfahren zur laufzeitgenauen Verrechnung eines Guthabens von unterschiedlichen Loyalitätsprogrammen in Abhängigkeit des Telefonierverhaltens und der Nutzung von Diensten im IP basierten Multimedia Subsystem (IMS) nach dem Oberbegriff des Patentanspruches 1.

Loyalitätsprogramme sind heutzutage ein wichtiges Instrument zur Gewinnung und Haltung von neuen bzw. bestehenden Kunden und finden daher zunehmend an Bedeutung.

Durch eine gezielte Kombination von unterschiedlichen LoyalitätsProgrammen eröffnet sich für ein Unternehmen der Zugang zu Loyalitäts-Systemen, welche eine Verbesserung der Kundenbindung und Neukundengewinnung darstellt.

Ein wichtigstes, bereits zur Verfügung stehendes Programm zur Bindung von Top- bzw. Stammkunden ist z. B. das Bonus- bzw. das Rabatt-Marketing. Ein derartiges Bonus- bzw. Rabatt-Marketing bietet dem Verbraucher den Vorteil, dass seitens des Anbieters insgesamt einen überragender Wert seiner Dienstleistung angeboten wird, wodurch dem Anbieter ein Wettbewerbsvorteil entsteht.

Ein wichtiger Wirtschaftsbereich zur Anwendung eines derartigen Verfahrens stellt der derzeitige Telekommunikationsbereich dar. Aufgrund des anhaltenden Preisverfalls von zur Verfügung gestellten Dienstleistungen in diesem Bereich und zunehmend vorteilhaften Vertragsbedingungen für den Kunden ist in diesem Bereich eine relativ hohe Fluktuation von Bestandskunden zwischen den Telekommunikationsanbietern für derartige Leistungen festzustellen.

Eine Reduzierung der Kundenfluktuation bzw. Haltung und Erweiterung von Bestandskunden ist zum Beispiel durch die Anwendung eines Loyalitätsprogramms zu erreichen, welches das Gutschreiben eines erzielten Bonus für den Kunden bzw. Nutzer vorsieht.

Das Dokument EP 1045324 A1 beschreiht ein Loyalitäts plattform für mehrere Loyalitätskunder programme.

Die Durchführung derartiger Loyalitätsprogramme ist daher auch für den Bereich von IP basierten Systemen anwendbar und Vorteilhaft.

In zukünftigen IP basierten Systemen, wie zum Beispiel IMS (IP Multimedia Subsystem) können Kriterien zur Gutschreibung von Loyalitätsboni relativ leicht definiert und auch aufgenommen werden.

Derartige Kriterien zur Gutschreibung von Loyalitätsboni sind zum Beispiel Anrufdaten, wie Zeitdauer, Zeitspannen, Datum, Monat und/oder das Jahr sein.

Es ist bekannt, dass ein Verfahren und eine Anordnung zur Erhebung von Nutzerverhalten zur Laufzeit im mobilen 3GPP IP basierten Multimedia Subsystem mittels einem Online Server durchgeführt werden.

Dieser Online Server (OSAS: Online Statistic and Advertisement Server) ist eine Anwendungsserverkomponente, welche in die IMS Session und in den entsprechenden Signalisierungsverkehr eingebunden ist.

Dieser OSAS weist den wesentlichen Vorteil auf, dass das Nutzerverhalten während der Laufzeit online gesehen werden kann und nicht nur im offline Modus, wie durch die aus dem Stand der Technik bekannte CDR-Bewertung (Call Detailed Record = ausführlicher Anrufbericht), welche eine Verzögerung von zum Teil mehreren Stunden aufweist.

So ist es möglich mit einem OSAS relevante Statistikdaten in einem Kommunikationssystem zu sammeln und eine Bewertung des Nutzerverhaltens während der Laufzeit der Anwendung durchzuführen.

Somit ist ein OSAS ebenfalls für die Bewertung des Telefonierverhaltens eines Nutzers verwendbar, wobei der OSAS die Erfassung, Auswertung und Darstellung aller Daten des Kunden für eine komplette Webstatistik online und nahezu in Echtzeit ausführt, die Webdienste in Anspruch genommen haben, sowie eine detaillierte Aufschlüsselung der Herkunft der Nutzer, sowohl nach geographischen Gesichtspunkten als auch aufgeschlüsselt nach Firmen und Organisationen.

Somit sind diese erfassten Statistikdaten auch für ein Bonusprogramm zur Gutschreibung eines Bonus des Nutzers mit Bezug auf sein Telefonierverhalten verwendbar.

Dieses Verfahren weist jedoch den wesentlichen Nachteil auf, dass eine Analyse der ermittelten Daten der Laufzeit und Vergleich mit gespeicherten Profildaten aus unterschiedlichen Loyalitätsprogrammen lediglich mittels Zusatzfunktion realisiert werden kann.

Aus diesem Grunde hat sich die Erfindung die Aufgabe gestellt ein Verfahren und ein System zur Verfügung zu stellen, welches dem Nutzer von IP-Diensten einen Bonus unterschiedlicher Bonusprogramme (Loyalitätsprogramme) gutschreibt und somit eine verbesserte Kundenbindung/-neugewinn für den Anbieter von IP-Diensten gewährleistet.

Die Lösung der Aufgabe ist durch Merkmale des Patentanspruches 1 gekennzeichnet.

Wesentliches Merkmal ist, dass mittels einem OSAS-Service Statistikdaten eines Nutzers erfasst und in einer entsprechenden Datenbank gespeichert werden, wobei diese Daten zur Gutschreibung eines Bonus für unterschiedliche Loyalitätsprogramme in Abhängigkeit des Nutzerverhaltens (Telefonierverhalten) und der Nutzung von IMS-Diensten verwendbar ist.

Neben den Kriterien zur Gutschreibung eines Loyalitätsboni durch die Erfassung von Nutzerdaten, wie zum Beispiel der Zeitdauer, Zeitspannen, Datum, Monat und/oder das Jahr, sind auch andere Kriterien zur Gutschreibung eines Loyalitätsbonus einsetzbar, wie zum Beispiel
- Rufnummern (ortsbezogen, Servicerufnummern)
- Zufallsgeneratorfunktionen, welche eine bestimmte Art der Nutzung von Mobilfunkdiensten triggern und anschließend dem Kunden als Boni gutschreiben;
- Zielbezogenes, eigenes PLMN (Pubilc Land Mobile Network), eigenes oder bevorzugtes Festnetz, oder fremde PLMN's;
- Bündelbezogene Kriterien, wie zum Beispiel die Nutzung von verschiedenen Diensten von zum Beispiel SMS, Videotelephonie, MMS, etc.;
- Anforderungen, welche von Vertriebspartnern direkt definiert werden, wie zum Beispiel eine Profildefinition einer Fluggesellschaft, welche ein Bonussystem für geflogene Streckenmeilen von Flugpassagieren durchführt;

Die Kunden bzw. Nutzer, welche an diesen Loyalitätsprogrammen teilnehmen wollen, werden in einem so genannten HSS (Home Subscriber Server) entsprechend als solche subskribiert (eingeschrieben). Die Loyalitätsprogramme sind also Teil der Subskription des Kunden im IMS.

Eine genaue und detaillierte Definition derartiger Kriterien für ein Loyalitätsprogramm ist abhängig von zum Beispiel marketingbezogenen Anforderungen und von den Anforderungen der Vertriebspartner, welche einen Loyalitätsbonus an ihre Kunden gutschreiben wollen.

Als ein derartiges Bonusprogramm sei hier das Beispiel des allgemein bekannten "Miles and More" - Bonusprogramm erwähnt, welches vorsieht, dass einem Flugpassagier anhand der gebuchten bzw. geflogenen Flugstrecken die Flugmeilen dieser Flugstrecken auf einem Kundenkonto als Punkte gutgeschrieben werden, wobei eine bestimmte Punkteanzahl dem Flugpassagier zum Beispiel Zusatzleistungen für weitere Flüge ermöglicht.

Mögliche Boni für die Nutzung von Diensten und Leistungen eines Kunden im IP basierten Multimedia Subsystem (IMS) können zum Beispiel sein:
- Operatoreigene Boni, wie zum Beispiel Gutschriften von Telefonminuten oder Gutschriften aller relevanten Mobilfunkdienste (SMS, MMS, Videotelephonie, web presence, Instant Messages etc.;
- Vertriebspartner bezogene Boni, wie zum Beispiel beim "Miles and More"-Programm, Geldgutscheine, Warengutscheine, Gutscheine für Veranstaltungen, Gewinnspiele etc.

Die zugrunde liegende Technik soll diese marktbezogenen Programme im IMS (IP-basiertes Multimedia Subsystem) in einfachster Weise unterstützen und diese relativ schnell umsetzen.

Im Folgenden wird die Erfindung anhand von einer, lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

Darin zeigt:

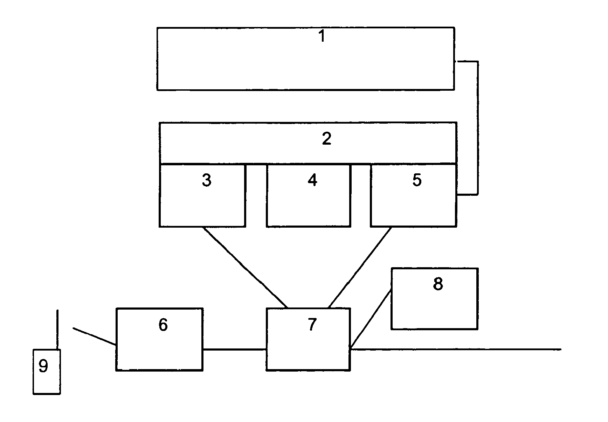

- Figur1:: eine erfindungsgemäße Architektur der Loyalitätsfunktionalität

Der in Figur 1 dargestellte Funktionsablauf zur Durchführung einer erfindungsgemäßen Loyalitätsfunktion zeigt, dass für die laufzeitbezogene Aufnahme das OSAS 3 (Online Statistic and Advertisement Server) System als Grundlage für die laufzeitbezogene Aufnahme von Kriterien für verschiedenartige Loyalitätsprogramme dient.

Hierbei nimmt der OSAS 3 im IMS 10 die Daten zur Laufzeitbestimmung auf, welche für die späteren Loyalitätsprogramme verwendet werden.

Hierzu ist es erforderlich, dass die Daten des OSAS Systems 3 zur Laufzeit analysiert werden.

Für eine derartige Analyse der erfassten Daten ist eine zusätzliche Funktion notwendig, welche die erfassten Daten des OSAS Systems 3 mit einem gespeicherten LPF-Funktions-Profil 4 (Loyality Profile Function) vergleicht.

Diese LPF-Funktion 4 ist eine Datenbankfunktion, die das Profil von Loyalitätsprogrammen speichert.

Eine weitere Funktion zur Abarbeitung der Loyalitätsprogramme liefert die OLS 5 (Online Loyality Server) Service Logik.

Die OLS 5 wird zur erfassten Laufzeit kontaktiert und liefert die notwendigen Schnittstellen zu den Operator Business Systemen 1, um den entsprechenden Bonus zur entsprechend erfassten Laufzeit gutzuschreiben.

Dabei wird der OLS 5 während der Diensterbringung lediglich dann getriggert, wenn der Kunde im HSS 8 (Home Subsciber Server) als Kunde zur Teilnahme an Loyalitätsprogrammen eingetragen ist.

Die hierfür notwendige Architektur zum Ablauf einer Diensterbringung mit Loyalitätsfunktion im IMS 10 ist in Figur 1 dargestellt und weist folgende Verfahrenschritte auf.
- Abspeichern von Loyalitätsprofilen in der LPF 4.
   Diese Daten enthalten alle Elemente, um die vorbeschriebenen Kriterien zur Gutschreibung von Loyalitätsboni zu überprüfen
   und zu steuern und werden vom Operator Marketing oder von Vertriebspartnern definiert.
- Registrierung des Kunden am IMS 10 (IP Multimedia Subsystem).
- Erkennung des Kunden, welcher am Loyalitätsprogramm teilnimmt, über das HSS Profil 8 im IMS 10 (IP Multimedia Subsystem).
- Anstoßen eines Dienstes durch den Kunden/Nutzer.
- Kontaktieren des OSAS 3 zur Laufzeit über das HSS Profil 8 und Aufnahme der Statistiken zur Laufzeit zum Dienst, wie zum Beispiel Art, Zeit, Zeitspannen und dergleichen.
- Triggern des der OLS 5 (Online Loyality Server) aufgrund des HSS Profiles 8, indem er zum Beispiel über eine SOA Backplane 2 (Service Oriented Architecture) auf den LPF 4 und OSAS 3 zugreift, um die Statistik und die Profildaten gegeneinander abzugleichen.
- Anstoßen der Schnittstellen durch den OLS 5, wenn die für ein Loyalitätsprogramm relevanten Voraussetzungen erfüllt sind, um zum Beispiel ein Guthaben in den Operator Systemen 1 gutzuschreiben.
- Benutzen von Operator Systemen durch den OLS 5, um den Kunden über Laufzeiten von Loyalitätstransaktionen zu informieren, wie zum Beispiel per MMS (Multiple Media Service) oder SMS (Short Message Service), die den Kunden über das aktuelle Guthaben, Gutscheine, aktuelle Bonusmeilen etc. informieren.
- Zur Verfügung stellen des Dienstes nach der Kontaktierung des OLS 5.

Durch diese Verfahrensschritte ist gewährleistet, dass die IMS Subskription 10 einen Parameter enthält, welcher für Loyalitätsprogramme reserviert ist. Somit wird der OLS 5 lediglich dann getriggert, wenn der Kunde eindeutig als IMS Kunde gekennzeichnet ist, der an Loyalitätsprogrammen teilnimmt.

Es werden neue Funktionen zur Verfügung gestellt - LPF 4 (Loyality Profile Function) und OLS 5 (Online Loyality Server) zur Steuerung und Definition von Loyality Programmen im IP based Multimedia Subsystem.
- Die LPF 4 speichert Profile, die Loyalitätsprogramme definiert, wie zum Beispiel operatorbezogen oder vertriebspartnerbezogen, wobei die Profile Trigger enthalten.
- Die Profile des LPF 4 beinhalten Trigger und Beschreibungen für die Bonusprogramme, wie zum Beispiel Geldgutschriften, Meilengutschriften oder Bonus-Ausschüttungen aller Art.
- Die OLS 5 steuert zur Laufzeit die Abwicklung der Loyalitätsbuchungen über die Operator Abrechnungssysteme.
- Zusätzlich werden Schnittstellen zur Abwicklung und zur Information des Kunden bereit gestellt.
- Die Schnittstellen können sowohl innerhalb der Operatordomain liegen als auch zu "3^{rd} parties" führen, wie zum Beispiel zu Fluggesellschaften, welche das "Miles and More"- Bonusprogramm praktizieren.
- Der OLS 5 führt hierbei die zentrale Funktion aus, welche die Service Logik ausführt und die Gutschriften veranlasst.

Das Verfahren zur Abrechnung von Loyalitätsprogrammen basiert auf
- den Vergleich von Laufzeitstatistiken mir vordefinierten Loyalitätsprofilen
- auf den Abgleich der Statistiken mit den Laufzeitprofilen
- Benachrichtigung des Endkunden über gutgeschriebene Boni über unterschiedliche Wege zur Laufzeit über z.B. SMS, MMS oder offline über 3^{rd} parties oder Portale oder postalisch,
- Buchung der Gutschriften über definierte Schnittstellen,
- Zufallsgeneratorfunktion in der LPF 4, um den Kunden in Abhängigkeit zufällig generierter Profile ein Guthaben bzw. Boni gutzuschreiben, wie zum Beispiel für Gewinnspiele oder Quizteilnahmen.

### Bezugszeichenliste

- 1.: Operator Systems - SMS/CRM/RBP
- 2.: SOA Backplane
- 3.: OSAS
- 4.: LPF
- 5.: OLS
- 6.: Access GPRS
- 7.: CSCF
- 8.: HSS
- 9.: cell phone
- 10.: IMS

### Bezugszeichenlegende

- IMS : Internet Protocol Multimedia Subsystem
- Operator Systems : Anwender Verfahren
- SMS : Short Message Service
- MMS : Multiple Media Service
- CRM : Customer Relationship Management oder
   Cell Rate Margin
- RPB :
- SOA Backplane : Service Oriented Architecture Backplane
- OSAS : Online Statistic and Advertisement Server
- LPF : Loyality Profile Function
- OLS : Online Loyality Server
- Access GPRS : Access Global Radio System
- CSCF : Call State Control Function
- HSS : Home Subscriber Server
- PLMN : Public Land Mobile Network

## Patentansprüche

1. Verfahren zur laufzeitgenauen Guthabenverrechnung von unterschiedlichen Loyalitätsprogrammen aufgrund des Telefonierverhaltens eines Nutzers und der Nutzung von IP basierten Multimedia Subsystem, IMS, Diensten, wobei in einer Datenbank Statistikdaten des Nutzers mittels eines Online Statistic Advertisement Server Service, OSAS (3), erfasst und gespeichert werden, wobei das Verfahren durch nachfolgende Verfahrensschritte gekennzeichnet ist:
- Abspeichern von Profilen von Loyalitätsprogrammen in einer Loyalty Profile Function, LPF (4), wobei die Profildaten alle Elemente enthalten um vorbeschriebenen Kriterien zur Gutschreibung von Loyalitätsboni zu überprüfen und zu steuern, und vom Operator Marketing oder von Vertriebspartnern definiert werden;
- Registrierung des Nutzers als Teilnehmer eines Loyalitätsprogramms in einem Home Subscriber Server Profil, HSS (8), als teil der IMS Subskription des Nutzers;
- Erkennung des Nutzers der am Loyalitätsprogramm teilnimmt über das HSS im IMS (10);
- Anstossen eines Dienstes durch den Nutzer;
- Kontaktieren des OSAS (3) zur Laufzeit eines Dienstes über das HSS Profil (8) und Aufnahme der Statistikdaten zur Laufzeit des Dienstes, wie zum Beispiel Art, Zeit, Zeitspannen und dergleichen;
- Triggern eines Online Loyality Server, OLS (5), aufgrund des HSS Profiles (8), indem er über eine Service Oriented Architecture, SOA, Backplane (2) auf den LPF (4) und OSAS (3) zugreift, um die Statistikdaten und die Profildaten gegeneinander abzugleichen;
- Lieferung von Schnittstellen zu Operator Systemen (1) und Anstossen von Schnittstellen durch den OLS (5), wenn die für ein Loyalitätsprogramm relevanten Voraussetzungen erfüllt sind, um ein Guthaben in den Operator Systemen (1) gutzuschreiben;
- Benutzen von den Operator Systemen (1) durch den OLS (5), um den Nutzer über Laufzeiten von Loyalitätstransaktionen zu informieren, wobei der Nutzer über das aktuelle Guthaben, Gutscheine oder aktuelle Bonusmeilen informiert wird, zum Beispiel per Multiple Media Service, MMS, oder Short Message Service, SMS;
- Zur Verfügung stellen des Dienstes nach der Kontaktierung des OLS (5).

2. Verfahren nach Anspruch 1, **dadurch gekennzeichnet, dass** die IMS Subskription (10) einen Parameter aufweist, welcher für Loyalitätsprogramme reserviert ist, wobei der OLS (5) getriggert wird, wenn der Nutzer eindeutig als an Loyalitätsprogrammen teilnehmender IMS Nutzer gekennzeichnet ist.

3. Verfahren nach einem der vorhergehenden Ansprüche 1 bis 2, **dadurch gekennzeichnet, dass** die LPF (4) Profile speichert, welche Loyalitätsprogramme definieren, wie zum Beispiel operatorbezogen oder vertriebspartnerbezogen, wobei die Profile Trigger enthalten.

4. Verfahren nach einem der vorhergehenden Ansprüche 1 bis 3, **dadurch gekennzeichnet, dass** die Profile der LPF (4) Beschreibungen für Bonusprogramme aufweisen, wie zum Beispiel Geldgutschriften, Meilengutschriften oder Bonus-Ausschüttungen sonstiger Art.

5. Verfahren nach einem der vorhergehenden Ansprüche 1 bis 4, **dadurch gekennzeichnet, dass** die OLS (5) zur Laufzeit die Abwicklung von-Loyalitätsbuchungen über Operator Abrechnungssysteme steuert, wobei zusätzlich Schnittstellen zur Abwicklung und zur Information des Nutzers bereit gestellt werden.

6. Verfahren nach einem der vorhergehenden Ansprüche 1 bis 5, **dadurch gekennzeichnet, dass** die Schnittstellen sowohl innerhalb der Operatordomain liegen als auch zu "3<rd> parties" führen, wie zum Beispiel zu Fluggesellschaften.

7. Verfahren nach einem der vorhergehenden Ansprüche 1 bis 6, **dadurch gekennzeichnet, dass** der OLS (5) eine zentrale Funktion ausführt, welche eine Service Logik ausführt und Gutschriften veranlasst.

8. Verfahren nach einem der vorhergehenden Ansprüche 1 bis 7, **dadurch gekennzeichnet, dass** Verfahren zur Abrechnung von Loyalitätsprogrammen auf den Vergleich von Laufzeitstatistiken mit vordefinierten Loyalitätsprofilen basiert.

9. Verfahren nach einem der vorhergehenden Ansprüche 1 bis 8, **dadurch gekennzeichnet, dass** das Verfahren auf den Abgleich der Statistiken mit den Laufzeitprofilen basiert.

10. Verfahren nach einem der vorhergehenden Ansprüche 1 bis 9, **dadurch gekennzeichnet, dass** das Verfahren auf die Benachrichtigung des Nutzers über gutgeschriebene Boni über unterschiedliche Wege zur Laufzeit über zum Beispiel SMS, MMS oder offline über 3<rd> parties oder Portale oder postalisch basiert, wobei die Buchung von Gutschriften über definierte Schnittstellen ausgeführt wird.

11. Verfahren nach einem der vorhergehenden Ansprüche 1 bis 10, **dadurch gekennzeichnet, dass** das Verfahren eine Zufallsgeneratorfunktion in der LPF (4) ausführt, um den Nutzer in Abhängigkeit zufällig generierter Profile ein Guthaben bzw. Boni gutzuschreiben, wie zum Beispiel für Gewinnspiele oder Quizteilnahmen.

## Claims

1. Method for credit accounting of different loyalty programmes for the correct period of validity on the basis of the telephoning behaviour of a user and the use of IP-based multimedia subsystem (IMS) services, wherein statistical data of the user are collected and stored in a database by means of an online statistic advertisement server service (OSAS) (3), wherein the method is **characterised by** the following steps:
- storage of profiles of loyalty programmes in a loyalty profile function (LPF) (4), wherein the profile data include all elements for checking and controlling previously described criteria for crediting loyalty bonuses, and are defined by the marketing operator or by sales partners;
- registration of the user as a subscriber to a loyalty programme in a home subscriber server profile (HSS) (8), as part of the IMS subscription of the user;
- recognition of the user who participates in the loyalty programme via the HSS in the IMS (10);
- initiation of a service by the user;
- contacting of the OSAS (3) on the period of validity of a service via the HSS profile (8) and inclusion of the statistical data on the period of validity of the service, such as for example type, time, lengths of time and the like;
- triggering of an online loyalty server (OLS) (5) on the basis of the HSS profile (8), by the fact that it accesses the LPF (4) and OSAS (3) via a service-oriented architecture (SOA) backplane (2) in order to compare the statistical data and the profile data with each other;
- delivery of interchanges to operator systems (1) and initiation of interchanges by the OLS (5) if the relevant conditions for a loyalty programme are fulfilled, in order to credit a credit balance in the operator systems (1);
- use of the operator systems (1) by the OLS (5) to inform the user about periods of validity of loyalty transactions, wherein the user is informed about the current credit balance, credit vouchers or current air miles, for example by multiple media service (MMS) or short message service (SMS);
- provision of the service after contacting of the OLS (5).

2. Method according to claim 1, **characterised in that** the IMS subscription (10) has a parameter which is reserved for loyalty programmes, wherein the OLS (5) is triggered when the user is uniquely identified as an IMS user participating in loyalty programmes.

3. Method according to one of the preceding claims 1 to 2, **characterised in that** the LPF (4) stores profiles which define loyalty programmes, such as for example operator-related or sales partner-related, wherein the profiles include triggers.

4. Method according to one of the preceding claims 1 to 3, **characterised in that** the profiles of the LPF (4) have descriptions for bonus programmes, such as for example cash credits, air mile credits or other types of bonus payments.

5. Method according to one of the preceding claims 1 to 4, **characterised in that** the OLS (5) for the period of validity controls the handling of loyalty entries via operator accounting systems, wherein in addition interfaces are provided for the handling and information of the user.

6. Method according to one of the preceding claims 1 to 5, **characterised in that** the interchanges both lie within the operator domain and lead to third parties, such as for example to airlines.

7. Method according to one of the preceding claims 1 to 6, **characterised in that** the OLS (5) performs a central function which carries out a logic service and produces credit entries.

8. Method according to one of the preceding claims 1 to 7, **characterised in that** the method for accounting of loyalty programmes is based on the comparison of statistics on the period of validity with predefined loyalty profiles.

9. Method according to one of the preceding claims 1 to 8, **characterised in that** the method is based on comparison of the statistics with the profiles on the period of validity.

10. Method according to one of the preceding claims 1 to 9, **characterised in that** the method is based on notification of the user about bonuses credited by different methods for the period of validity via for example SMS, MMS or off line via third parties or portals or by post, wherein the entry of credits is carried out via defined interchanges.

11. Method according to one of the preceding claims 1 to 10, **characterised in that** the method performs a random generator function in the LPF (4) in order to credit a credit balance or bonuses, such as for example for lotteries or quiz participation, to the user as a function of randomly generated profiles.

## Revendications

1. Procédé de calcul de crédit en temps réel de différents programmes de fidélisation sur la base du comportement téléphonique d'un utilisateur et de l'utilisation de services de sous-systèmes multimédia IP, IMS, étant précisé que dans une banque de données, des données statistiques de l'utilisateur sont saisies et mises en mémoire à l'aide d'un serveur OSAS (3) (serveur de publicité et statistique en ligne), et que le procédé est **caractérisé par** les étapes suivantes :
- mise en mémoire de profils de programmes de fidélisation dans une fonction de profil de fidélisation, LPF (4), étant précisé que les données de profil contiennent tous les éléments pour vérifier et commander des critères prescrits pour créditer des bonus de fidélisation, et sont définies par le marketing d'opérateur ou par des partenaires commerciaux ;
- enregistrement de l'utilisateur comme abonné d'un programme de fidélisation dans un HSS (8) (profil de serveur d'abonnés nominal) qui fait partie de l'abonnement IMS de l'utilisateur ;
- identification de l'utilisateur qui participe au programme de fidélisation, par l'intermédiaire du HSS dans IMS (10) ;
- sélection d'un service par l'utilisateur ;
- prise de contact avec l'OSAS (3) pour la durée d'un service par l'intermédiaire du profil HSS (8), et relevé des données statistiques pour cette durée, comme par exemple le type, l'heure, les intervalles de temps, etc. ;
- déclenchement d'un serveur de fidélisation en ligne, OLS (5), sur la base du profil HSS (8), grâce au fait que le serveur accède par l'intermédiaire d'un fond de panier (2) d'architecture orientée services, SOA, à la LPF (4) et à l'OSAS afin de comparer les données statistiques et les données de profil,
- fourniture d'interfaces avec les systèmes d'opérateur (1) et sélection d'interfaces par l'OLS (5) si les conditions préalables relatives à un programme de fidélisation sont remplies pour créditer un avoir dans les systèmes d'opérateur (1) ;
- utilisation des systèmes d'opérateur (1) par l'OLS (5) pour informer l'utilisateur sur les durées de transactions de fidélisation, étant précisé que l'utilisateur est informé sur son crédit actuel, sur des avoirs ou des miles actuels, par exemple par MMS ou SMS ;
- mise à disposition du service après la prise de contact avec l'OLS (5).

2. Procédé selon la revendication 1, **caractérisé en ce que** l'abonnement IMS (10) comporte un paramètre qui est réservé pour des programmes de fidélisation, étant précisé que l'OLS (5) est déclenché quand l'utilisateur est identifié clairement comme un utilisateur IMS participant aux programmes de fidélisation.

3. Procédé selon l'une des revendications 1 à 2 précédentes, **caractérisé en ce que** la LPF (4) met en mémoire des profils qui définissent des programmes de fidélisation, liés par exemple à l'opérateur ou à un partenaire commercial, étant précisé que les profils contiennent des déclencheurs.

4. Procédé selon l'une des revendications 1 à 3 précédentes, **caractérisé en ce que** les profils de la LPF (5) comportent des descriptions pour des programmes de bonus comme par exemple des crédits en argent ou en miles ou des distributions de bonus autres.

5. Procédé selon l'une des revendications 1 à 4 précédentes, **caractérisé en ce que** l'OLS (5) commande pour la durée le déroulement de comptabilisations de fidélisation par l'intermédiaire de systèmes de décompte d'opérateur, étant précisé qu'en supplément, des interfaces sont fournies pour le déroulement et pour l'information de l'utilisateur.

6. Procédé selon l'une des revendications 1 à 5 précédentes, **caractérisé en ce que** les interfaces sont situées à l'intérieur du domaine d'opérateur ou mènent tout aussi bien à des tiers comme par exemple des compagnies aériennes.

7. Procédé selon l'une des revendications 1 à 6 précédentes, **caractérisé en ce que** l'OLS (5) exécute une fonction centrale qui exécute un système logique de service et déclenche des crédits.

8. Procédé selon l'une des revendications 1 à 7 précédentes, **caractérisé en ce que** le procédé pour décompter des programmes de fidélisation est basé sur la comparaison de statistiques de durée avec des profils de fidélisation prédéfinis.

9. Procédé selon l'une des revendications 1 à 8 précédentes, **caractérisé en ce qu'**il est basé sur la comparaison des statistiques avec les profils de durée.

10. Procédé selon l'une des revendications 1 à 9 précédentes, **caractérisé en ce qu'**il est basé sur la notification à l'utilisateur de bonus crédités, par des voies différentes, pour la durée, par exemple par SMS, MMS ou hors ligne grâce à des tiers ou à des portails ou par la poste, étant précisé que la comptabilisation de crédits est réalisée par l'intermédiaire d'interfaces définies.

11. Procédé selon l'une des revendications 1 à 10 précédentes, **caractérisé en ce qu'**il exécute une fonction de générateur aléatoire dans la LPF (4) pour créditer à l'utilisateur un avoir ou des bonus en fonction de profils générés de manière aléatoire, comme par exemple pour des jeux ou des participations à un quiz.
